# EUROPÄISCHE PATENTSCHRIFT

(11) **EP 0 535 172 B1**
(45) Veröffentlichungstag und Bekanntmachung des Hinweises auf die Patenterteilung: **12.04.1995**
(21) Anmeldenummer: 92903180.5
(22) Anmeldetag: 29.01.1992
(51) Int. Cl.: B60T 8/50

(54) **BREMSDRUCKREGELVORRICHTUNG FÜR EINE HYDRAULISCHE KRAFTFAHRZEUGBREMSANLAGE**
BRAKE PRESSURE REGULATING DEVICE FOR A HYDRAULIC BRAKING SYSTEM FOR MOTOR VEHICLES
DISPOSITIF DE REGULATION DE PRESSION DE FREINAGE DANS UN CIRCUIT DE FREINAGE HYDRAULIQUE POUR VEHICULES AUTOMOBILES

(30) Priorität: 18.04.1991 DE 4112673; 31.07.1991 DE 4125304
(43) Veröffentlichungstag der Anmeldung: 07.04.1993
(73) Patentinhaber: ITT Automotive Europe GmbH, 60488 Frankfurt (DE)
(72) Erfinder: BURGDORF, Jochen, D-6050 Offenbach-Rumpenheim (DE); STEFFES, Helmut, D-6234 Hattersheim 3 (DE); VOLZ, Peter, D-6100 Darmstadt (DE); BECK, Erhard, D-6290 Weilburg (DE); ZAVISKA, Dalibor, D-6230 Frankfurt/Main 80 (DE); OTTO, Albrecht, D-6450 Hanau 6 (DE); RISCH, Stefan, D-6200 Wiesbaden (DE)
(86) Internationale Anmeldenummer: EP9200185
(87) Internationale Veröffentlichungsnummer: WO9218364

(56) Entgegenhaltungen:
- EP-A- 0 171 901
- EP-A- 0 303 261
- WO-A-80/01783
- DE-A- 3 919 842
- GB-A- 2 090 929
- US-A- 4 715 666

## Beschreibung

Die Erfindung betrifft eine Bremsdruckregelvorrichtung für eine hydraulische Kraftfahrzeugbremsanlage mit einem Bremsdruckgeber, wenigstens einem an diesen über eine Druckleitung angeschlossenen Bremsdrucknehmer zur Betätigung einer Bremse, einem in der Druckleitung angeordneten, druckgesteuerten Einlaßventil, durch das der Bremsdruckgeber in einer ersten Schaltstellung ungedrosselt und in einer zweiten Schaltstellung über eine Drosselblende mit dem Bremsdrucknehmer verbunden wird und das einen Steuerkolben aufweist, der in einer Richtung vom Druck in der Druckleitung und in der entgegengesetzten Richtung von einer Feder und vom Druck in einer an das Ventil angeschlossenen Rücklaufleitung beaufschlagt ist, die ein durch eine Regeleinrichtung steuerbares Auslaßventil enthält, das in seiner Ruhestellung die Rücklaufleitung sperrt und in seiner Schaltstellung die Rücklaufleitung freigibt, wobei der Steuerkolben eine Verbindung zwischen dem Bremsdrucknehmer und der Rücklaufleitung steuert.

Bremsdruckregelvorrichtungen der angegebenen Art dienen zur automatischen Regelung des Bremsdrucks in Abhängigkeit von der durch eine Überwachungseinrichtung beobachteten Drehbewegung eines oder mehrerer Räder eines Fahrzeugs, um das Blockieren der Räder beim Bremsvorgang oder auch ein Durchdrehen der angetriebenen Räder beim Anfahren zu vermeiden.

Eine Bremsdruckregelvorrichtung der angegebenen Art ist aus der US-PS 4,715,666 bekannt. Bei dieser Bremsdruckregelvorrichtung ist das Einlaßventil als Stromregelventil ausgebildet, wobei die Drosselblende in einer Längsbohrung des Steuerkolbens angeordnet ist und der Steuerkolben ausschließlich vom Druck des Druckgebers und vom Druck in der Rücklaufleitung beaufschlagt ist. Das bekannte Stromregelventil hat den Nachteil, daß ein Druckabbau in der zum Bremsdrucknehmer führenden Druckleitung nach dem Öffnen des Auslaßventils erst mit Verzögerung einsetzt, da zunächst der Steuerkolben verschoben werden muß, bevor dem Bremsdrucknehmer Druckmittel entnommen werden kann. Bei den geringen Steuerzeiten, die bei einer Bremsschlupfregelung für einen Druckabbau wie auch einen Druckwiederaufbau benötigt werden, wirkt sich eine solche Verzögerung des Druckabbaus ungünstig auf das Regelverhalten aus.

Weiterhin ist bei dem bekannten Stromregelventil eine genaue Positionierung der mit dem Steuerkolben zusammenwirkenden Anschlußbohrungen erforderlich, wodurch die Herstellung verteuert wird.

Aus der DE-OS 39 19 842 ist weiterhin eine blockiergeschützte, hydraulische Bremsanlage für Kraftfahrzeuge bekannt, bei der die Bremsdruckregelvorrichtung in der vom Bremsdruckgeber zum Bremsdrucknehmer führenden Druckleitung ein Drosselventil aufweist, das in Abhängigkeit vom Druck am Ausgang eines Pumpenkreises, der bei Einsetzen einer Regelung zu fördern beginnt, von einer ersten Schaltstellung mit freiem Durchgang in eine zweite Schaltstellung geschaltet wird, in der die Verbindung zwischen dem Bremsdrucknehmer und dem Bremsdruckgeber gedrosselt ist. Hierbei kann das Auslaßventil unmittelbar an den Bremsdrucknehmer angeschlossen sein, so daß ein schneller Druckabbau möglich ist. Es sind aber zusätzliche Rückschlagventile erforderlich, um einen Druckaufbau in der Steuerleitung des Drosselventils bei einer Bremsbetätigung ohne Bremsdruckregelung zu verhindern.

Der Erfindung liegt die Aufgabe zugrunde, eine Bremsdruckregelvorrichtung der eingangs genannten Art zu schaffen, die sich bei geringem Bauaufwand vor allem durch einen schnellen Druckabbau beim Öffnen des Auslaßventils auszeichnet.

Erfindungsgemäß wird diese Aufgabe dadurch gelöst, daß das Einlaßventil ein mit dem Steuerkolben zusammenwirkendes Ventilelement aufweist, das in der zweiten Schaltstellung die Druckleitung sperrt und einen durch eine Längsbohrung des Steuerkolbens gebildeten Ventilsitz freigibt, durch den der Bremsdrucknehmer an die Rücklaufleitung anschließbar ist, und daß parallel zum Ventilsitz des Steuerkolbens der Bremsdrucknehmer über einen Drosselquerschnitt mit der Rücklaufleitung verbunden ist.

Bei der erfindungsgemäßen Bremsdruckregelvorrichtung ist der Bremsdrucknehmer in der ersten Schaltstellung des Einlaßventils zwar ebenfalls von der Rücklaufleitung getrennt. Beim Öffnen des Auslaßventils und der dadurch einsetzenden Schaltbewegung des Steuerkolbens setzt der Druckabbau am Bremsdrucknehmer aber bereits ein, bevor die Verbindung zur Rücklaufleitung geöffnet wird, da zum Bewegen des Steuerkolbens auch Druckmittel aus der zum Bremsdrucknehmer führenden Druckleitung entnommen wird. Weiterhin werden durch die Ausgestaltung des Einlaßventils als Doppelsitzventil sehr kurze Schaltwege und entsprechend kurze Schaltzeiten ermöglicht.

Erfindungsgemäß kann ein Ringspalt zwischen der Mantelfläche des Steuerkolbens und der Ventilbohrung gebildet sein, in der der Steuerkolben gelagert ist. Hierbei kann der Steuerkolben zur Erzielung einer definierten Gleitwirkung in seiner Mantelfläche Radialnuten aufweisen. Durch diese Ausgestaltung lassen sich geringe und konstante Verschiebekräfte am Steuerkolben erzielen, wodurch ein schnelles Schalten bei geringer Druckdifferenz erreicht wird. Darüberhinaus wird durch den Drosselquerschnitt zwischen der Rücklaufleitung und dem Bremsdrucknehmer das Zurückschalten des Einlaßventils in der Druckwiederaufbauphase erleichtert und ein Druckausgleich zwischen Rücklaufleitung und Druckleitung ermöglicht, ohne daß dadurch die Schaltfunktion des Ventils beim Druckabbau beeinträchtigt wird.

Nach einem weiteren Vorschlag der Erfindung ist vorgesehen, daß die Drosselblende auswechselbar in einem parallel zum Einlaßventil, beide Zweige der Druckleitung verbindenden Kanal angeordnet ist. Hierdurch wird ein Abstimmen des Blendenquerschnitts bei der Herstellung oder beim Einbau der Bremsdruckregelvorrichtung ermöglicht, um durch Herstellungstoleranzen bedingte Abweichungen im Regelverhalten ausgleichen zu können. Beiderseits der Drosselblende können erfindungsgemäß Filterelemente angeordnet sein, so daß eine Verschmutzung der Blende und damit eine Veränderung der Drosselwirkung unterbunden wird. Vorzugsweise sind die Drosselblende und die Filterelemente in einer Hülse angeordnet, die von außen in eine Gehäusebohrung einsetzbar ist.

Die Erfindung sieht weiterhin vor, daß das Einlaßventil als Doppelkugelsitzventil ausgebildet ist mit einem durch eine Kugel gebildeten Ventilelement, das mit einem gehäusefesten, äußeren Ventilsitz und einem beweglichen, inneren Ventilsitz zusammenwirkt. Diese Ausgestaltung begünstigt eine einfache und genaue Herstellung des Einlaßventils. Das Ventilelement des Einlaßventils kann durch eine Feder mit einer auf die Ventilsitze gerichteten Kraft beaufschlagt sein, so daß das Ventilelement in der Ruhestellung des Ventils gegen den Ventilsitz des Steuerkolbens gedrückt und beim Schalten durch die Feder in seiner Schließbewegung unterstützt wird. Diese Ausgestaltung erschwert aber das Entlüften des an die Rücklaufleitung angeschlossenen Ventilraums.

Um eine regelmäßige Entlüftung des mit der Rücklaufleitung verbundenen Ventilraums zu gewährleisten, kann nach einem weiteren Vorschlag der Erfindung vorgesehen sein, daß das Ventilelement in der Ruhestellung durch die Kraft einer am äußeren Ventilsitz abgestützten Feder in einer von den Ventilsitzen abgehobenen Stellung gehalten wird und daß Mittel zur Erzeugung eines der Federkraft entgegengerichteten, dynamischen Staudrucks vorgesehen sind, durch den das Ventilelement bei einem vom Bremsdruckgeber über die Druckleitung zum Bremsdrucknehmer oder zur Rücklaufleitung gerichteten Druckmittelstrom gegen den inneren Ventilsitz am Steuerkolben gedrückt wird. Die Mittel zur Erzeugung eines dynamischen Staudrucks können erfindungsgemäß aus einer zylindrischen Hülse bestehen, die das aus einer Kugel bestehende Ventilelement mit geringem Abstand umgibt. Bei dieser erfindungsgemäßen Ausgestaltung sind in der Ruhestellung des Einlaßventils beide Ventilsitze offen, so daß die Rücklaufleitung mit der Druckleitung in Verbindung steht und in die Rücklaufleitung eingedrungene Luftblasen entweichen können. Eine Beeinträchtigung der Schaltgeschwindigkeit des Einlaßventils durch in die Rücklaufleitung eingedrungene Luftblasen wird somit vermieden.

Die oben genannte Aufgabe wird auch dadurch gelöst, daß das Einlaßventil ein Sitzventil mit einem durch den Steuerkolben betätigbaren Ventilelement aufweist, das in der Drosselstellung einen zur Drosselblende parallelen Ventilsitz sperrt und daß der Steuerkolben in der Drosselstellung unabhängig vom Ventilelement druckgesteuert bewegbar ist.

Bei der erfindungsgemäßen Bremsdruckregelvorrichtung ist der Bremsdrucknehmer in der ersten Schaltstellung des Einlaßventils zwar ebenfalls von der Rücklaufleitung getrennt. Beim Öffnen des Auslaßventils und der dadurch einsetzenden Schaltbewegung des Steuerkolbens setzt der Druckabbau am Bremsdrucknehmer aber bereits ein, bevor die Verbindung zur Rücklaufleitung geöffnet wird, da zum Bewegen des Steuerkolbens auch Druckmittel aus der zum Bremsdrucknehmer führenden Druckleitung entnommen wird. Weiterhin kann der Schließweg des Sitzventils sehr kurz bemessen sein, wodurch kurze Schaltzeiten ermöglicht werden.

Die Trennung von Steuerkolben und Ventilelement führt weiterhin zu dem Vorteil, daß die mit dem Steuerkolben zusammenwirkenden Steuerkanten oder Ventilbohrungen nicht sehr genau positioniert sein müssen, so daß eine einfache und kostengünstige Herstellung möglich ist. Der Querschnitt des Steuerkolbens kann klein bemessen sein, da er keine Verbindungsbohrungen enthält. Dies ermöglicht einen geringen Einbauraum und trägt ebenfalls zur Verringerung der Herstellkosten und zur Verkürzung der Schaltzeiten bei. Weiterhin vereinfacht und verbilligt die Gleitpassung zwischen dem Steuerkolben und seiner Aufnahmebohrung die Abdichtung zum Auslaßventil.

Eine vorteilhafte Ausgestaltung der Erfindung sieht vor, daß der Steuerkolben in einer Längsbohrung eines zylindrischen Ventileinsatzes gelagert ist, der an einem Ende den Ventilsitz trägt und im Abstand voneinander in die Längsbohrung mündende Ventilbohrungen aufweist, die durch eine Steuernut im Steuerkolben miteinander verbindbar sind. Diese Ausgestaltung sorgt ebenfalls für eine einfache Herstellung und vereinfacht den Einbau des Einlaßventils in einen Gehäuseblock, der mehrere Bauelemente der Bremsdruckregelvorrichtung enthält. Hierbei kann weiterhin vorgesehen sein, daß der Ventileinsatz in einer Nut in seiner Mantelfläche einen die Mündung einer Ventilbohrung bedeckenden ringförmigen Filtereinsatz aufweist. Weiterhin kann das von einer Kugel gebildete Ventilelement mit einer das Ventilelement beaufschlagenden Ventilfeder in einem topfförmigen Filterelement angeordnet sein, das von dem Ventileinsatz in seiner Einbaulage in einer Gehäusebohrung gehalten wird.

Die Erfindung wird nachfolgend anhand von Ausführungsbeispielen näher erläutert, die in der Zeichnung dargestellt sind. Es zeigen
- Figur 1: eine schematische Darstellung einer hydraulischen Kraftfahrzeugbremsanlage mit einer erfindungsgemäßen Bremsdruckregelvorrichtung,
- Figur 2: eine Schnittdarstellung einer Ausführungsform des hydraulisch gesteuerten Einlaßventils der erfindungsgemäßen Bremsdruckregelvorrichtung und
- Figur 3: eine Schnittdarstellung einer anderen Ausführungsform des Einlaßventils der erfindungsgemäßen Bremsdruckregelvorrichtung,
- Figur 4: eine Schnittdarstellung einer Ausführungsform des hydraulisch gesteuerten Einlaßventils der erfindungsgemäßen Bremsdruckregelvorrichtung.

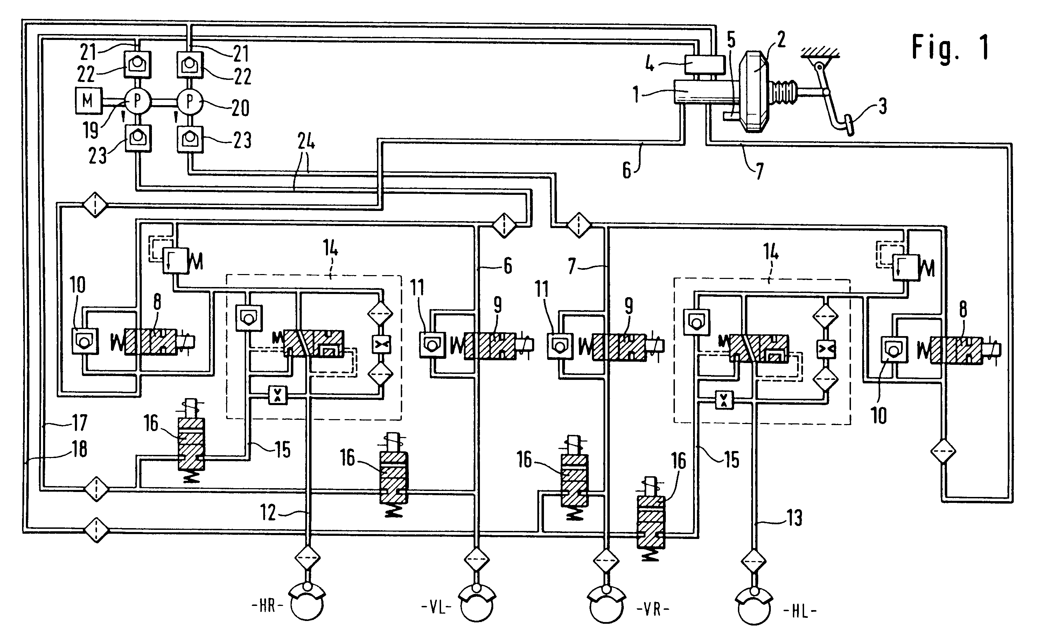

Die in Figur 1 dargestellte hydraulische Bremsanlage umfaßt einen Hauptbremszylinder 1 mit einem Unterdruckbremskraftverstärker 2, der durch ein Bremspedal 3 zu betätigen ist.

Der Hauptbremszylinder 1 ist mit einem Vorratsbehälter 4 für das hydraulische Druckmittel versehen, der mit den Arbeitskammern des Hauptbremszylinders 1 in Verbindung steht, solange das Bremspedal 3 nicht betätigt ist. An dem Unterdruckbremskraftverstärker 2 ist ein Wegschalter 5 angeordnet, der den Hub des Verstärkerkolbens erfaßt. Die Signale des Wegschalters 5 dienen zur Pumpensteuerung und zur Positionierung des Bremspedals 3 während einer Bremsschlupfregelung.

Von dem Hauptbremszylinder 1 führt eine erste Druckleitung 6 zu einer am linken Vorderrad eines Fahrzeugs angeordneten Bremse VL, und eine zweite Druckleitung 7 führt zu einer am rechten Vorderrad des Fahrzeugs angeordneten Bremse VR. In den Druckleitungen 6, 7 sind jeweils hintereinander zwei elektromagnetisch betätigbare Ventile 8, 9 angeordnet, die in ihrer Ruhestellung offen sind und durch Erregung ihres Betätigungsmagneten in eine Sperrstellung geschaltet werden können, in der sie die Druckleitung 6 bzw. 7 sperren. Parallel zu den Ventilen 8 sind Rückschlagventile 10 vorgesehen, die in Richtung der Bremsen VL, VR öffnen. Parallel zu den Ventilen 9 angeordnete Rückschlagventile 11 öffnen in Richtung des Hauptbremszylinders 1.

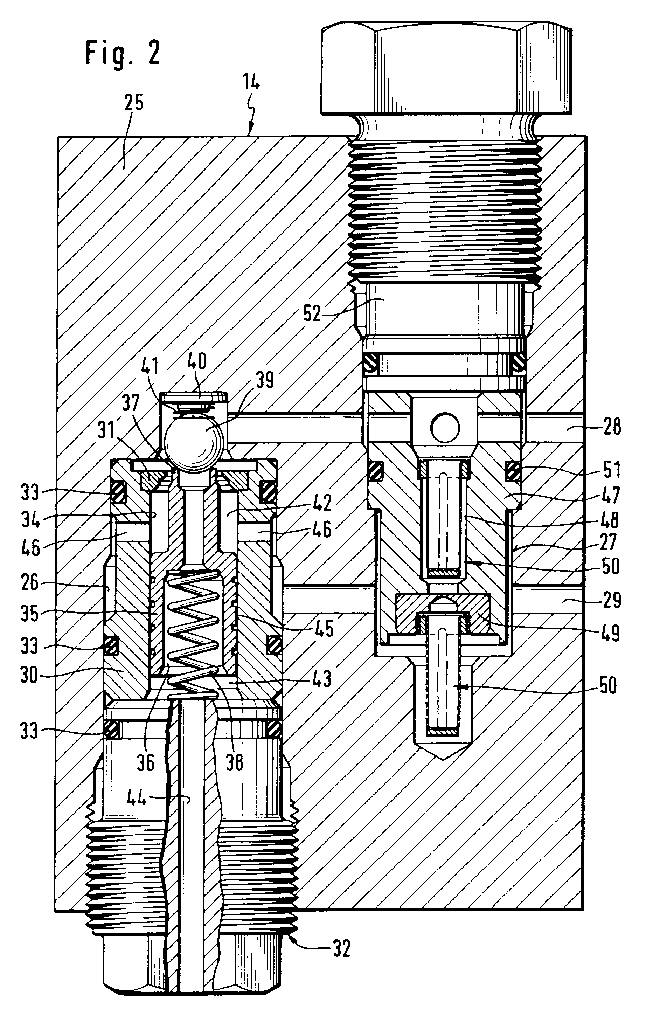

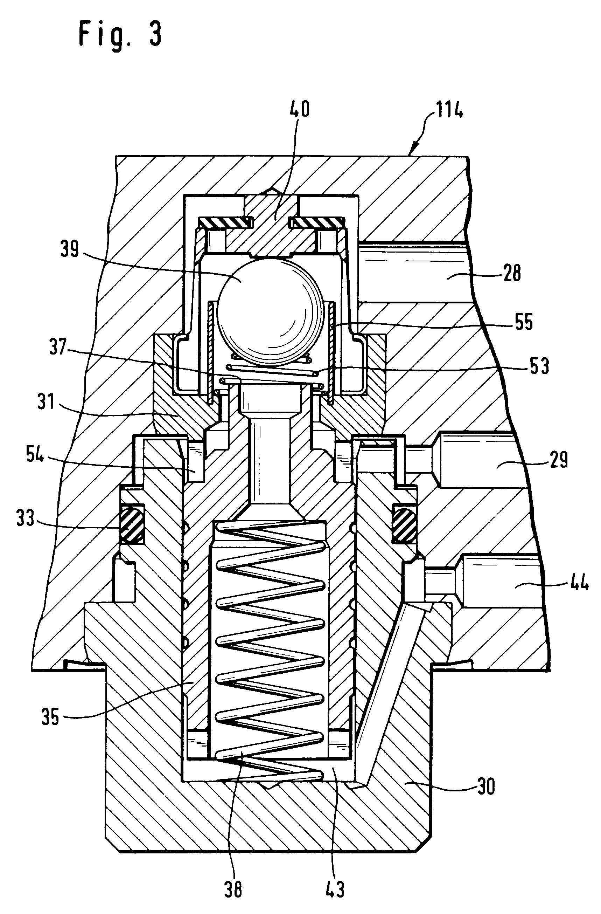

Zwischen dem Hauptbremszylinder 1 und den Ventilen 8 zweigen von den Druckleitungen 6, 7 Druckleitungen 12, 13 ab, die jeweils zu einer am rechten bzw. linken Hinterrad des Fahrzeugs angeordneten Bremse HR bzw. HL führen. In den Druckleitungen 12, 13 befinden sich druckgesteuerte Einlaßventile 14, deren Aufbau und Wirkungsweise anhand von den Figuren 2 und 3 weiter unten beschrieben sind. Die Einlaßventile 14 sind in ihrer Ruhestellung offen und können in eine Sperrstellung geschaltet werden, in der in die Druckleitungen 12, 13 eine Drosselblende eingeschaltet ist.

Über Auslaßleitungen 15 mit Auslaßventilen 16 sind die Bremsen VL, VR unmittelbar und die Bremsen HL, HR über die Einlaßventile 14 mit Rücklaufleitungen 17, 18 verbunden, die in den Vorratsbehälter 4 münden. Die elektromagnetisch betätigbaren Auslaßventile 16 sind in ihrer Ruhestellung gesperrt und können durch Erregung ihres Betätigungsmagneten in eine Offenstellung geschaltet werden.

Den Druckleitungen 6, 7 ist jeweils eine Pumpe 19, 20 zugeordnet. Die Pumpen 19, 20 werden von einem gemeinsamen Motor M angetrieben. Ihre Saugseiten stehen über Saugleitungen 21 mit den Rücklaufleitungen 17, 18 in Verbindung. Jede Saugleitung 21 enthält ein Saugventil 22, das zur Rücklaufleitung hin sperrt. Die Druckseiten der Pumpen 19, 20 sind jeweils über ein Druckventil 23 und eine Druckleitung 24 zwischen den Ventilen 8, 9 an die Druckleitungen 6 bzw. 7 angeschlossen. In den Druckleitungen 6, 7 und den mit diesen verbundenen Druckleitungen 12, 13 kann somit je nach Steuerung der Bremsanlage sowohl mit Hilfe des Hauptbremszylinders 1 als auch mit Hilfe der Pumpen 19, 20 ein Druck aufgebaut werden. Der Hauptbremszylinder 1 und die Pumpen 19, 20 bilden somit den Bremsdruckgeber. Bremsdrucknehmer sind die Radbremszylinder der Bremsen VL, VR, HL, HR. Die Druckleitungen 6, 12 einerseits und 7, 13 andererseits bilden jeweils einen unabhängigen Bremskreis. An jeden Bremskreis sind entsprechend zwei diagonal in Bezug auf das Fahrzeug angeordnete Bremsen angeschlossen.

Bei der beschriebenen Bremsanlage wird der Druck an den Bremsen VL, VR zur Regelung des Bremsschlupfes oder des Antriebsschlupfes an den Vorderrädern des Fahrzeuges in bekannter Weise durch wechselweises Ansteuern der Ventile 9 und der diesen zugeordneten Auslaßventile 16 variiert, wobei das zur Regelung benötigte Druckmittel von den Pumpen 19, 20 gefördert wird. Die Ventile 8 werden bei einer Antriebsschlupfregelung angesteuert, um zu verhindern, daß das von den Pumpen 19, 20 geförderte Druckmittel zum Hauptbremszylinder 1 gelangt. Eine Regelung des Bremsdrucks an den Bremsen HR, HL der Hinterräder des Fahrzeugs erfolgt mit Hilfe der Einlaßventile 14 und der diesen zugeordneten Auslaßventilen 16 und wird nachfolgend im einzelnen in Verbindung mit dem in Figur 2 dargestellten Ausführungsbeispiel beschrieben.

Bei dem in Figur 2 dargestellten Ausführungsbeispiel des druckgesteuerten Einlaßventils 14 sind in einem Gehäuse 25 parallele Stufenbohrungen 26, 27 und senkrecht dazu parallele Kanalbohrungen 28, 29 angeordnet, die die Stufenbohrung 27 durchdringen und in die Stufenbohrung 26 münden. In der Stufenbohrung 26 befindet sich ein hülsenförmiger Ventileinsatz 30 mit einem Ventilsitz 31, der durch einen Anschlußstopfen 32 arretiert ist. Dichtringe 33 dichten den Ventileinsatz 30 beiderseits der Kanalbohrung 29 und den Anschlußstopfen 32 in der Stufenbohrung 26 ab. Der Ventileinsatz 30 weist eine Bohrung 34 auf, deren Durchmesser größer ist als der Durchmesser des Ventilsitzes 31. In der Bohrung 34 ist ein Steuerkolben 35 mit einer gestuften Längsbohrung 36 axial beweglich gelagert, der an seinem verjüngten Ende, das durch den Ventilsitz 31 hindurchragt, einen Ventilsitz 37 hat. Mit seinem Ventilsitz 37 wird der Steuerkolben 35 von einer am Anschlußstopfen 32 abgestützten Druckfeder 38 gegen eine als Ventilelement dienende Kugel 39 gedrückt, die an einer Anschlagscheibe 40 am Boden der Stufenbohrung 26 anliegt, wobei sie vom Ventilsitz 31 abgehoben ist. Zwischen der Anschlagscheibe 40 und der Kugel 39 ist eine Druckfeder 41 angeordnet, deren Vorspannkraft geringer ist als die Kraft der Druckfeder 38. Der Steuerkolben 35 teilt die Bohrung 34 in einen an den Ventilsitz 31 angrenzenden Ventilraum 42 und einen Auslaßraum 43, in den eine den Anschlußstopfen 32 durchdringende Anschlußbohrung 44 mündet. Die in der Bohrung 34 geführte Mantelfläche des Steuerkolbens 35 ist mit Radialnuten versehen, und das Spiel zwischen der Mantelfläche und der Bohrung 34 ist so bemessen, daß ein Ringspalt 45 gebildet wird, durch den Druckmittel in geringer Menge hindurchtreten kann. Der Ventilraum 42 steht durch Radialbohrungen 46 mit der Kanalbohrung 29 in Verbindung. Die Kanalbohrung 28 mündet in die die Kugel 39 aufnehmende Endstufe der Stufenbohrung 26, die durch den Ventilsitz 31 und die diesem benachbarte Dichtung 33 von der Bohrung 34 getrennt ist.

In der Stufenbohrung 27 befindet sich eine Hülse 47 mit einer Längsbohrung 48, durch die die Kanalbohrungen 28, 29 miteinander verbunden sind. In die Längsbohrung 48 ist eine Drosselblende 49 eingesetzt. Beiderseits der Drosselblende 49 befinden sich Filterpatronen 50, die ein Verschmutzen der Drosselblende 49 verhindern. Dichtringe 51 sorgen zwischen den Kanalbohrungen 28, 29 für eine Abdichtung der Hülse 47 in der Stufenbohrung 27. Die Hülse 47 wird durch einen Stopfen 52 gehalten, der die Stufenbohrung 27 nach außen verschließt. Mit Hilfe der Hülse 47 läßt sich die Drosselblende 49 ohne die Gefahr einer Verschmutzung in die Stufenbohrung 27 einsetzen, da die Filterpatronen 50 bereits vor dem Einbau unmittelbar im Anschluß an eine Reinigung der Drosselblende 49 mit der Hülse 47 verbunden werden können.

Figur 2 zeigt das Einlaßventil 14 in seiner Grundstellung, in der die an die Druckleitung 6 oder 7 anzuschließende Kanalbohrung 28 mit der an die Druckleitung 12 oder 13 anzuschließenden Kanalbohrung 29 über den offenen Ventilsitz 31 in Verbindung steht. Parallel zum Ventilsitz 31 sind die Kanalbohrungen 28, 29 weiterhin über die Drosselblende 49 miteinander verbunden. Der Ventilsitz 37 ist durch die Kugel 39 verschlossen, so daß der Auslaßraum 43 nur über den Drosselquerschnitt 45 längs der Mantelfläche des Steuerkolbens 35 an die Kanalbohrungen 28, 29 angeschlossen ist. Dies ist ausreichend, um einen Druckausgleich zwischen dem Auslaßraum 43 und den Kanalbohrungen 28, 29 zu ermöglichen. In dieser Stellung verbleibt das Einlaßventil 14, solange keine Bremsdruckregelung stattfindet und das an die Anschlußbohrung 44 angeschlossene Auslaßventil 16 geschlossen ist. Die Bremsen HR, HL können dabei durch Betätigen des Hauptbremszylinders 1 nach Maßgabe der am Bremspedal 3 ausgeübten Kraft mit Druck beaufschlagt werden.

Wird während eines Bremsvorgangs mittels hierfür vorgesehener Sensoren festgestellt, daß eines der Fahrzeugräder, beispielsweise das rechte Hinterrad, zu blockieren droht, so wird von einem elektronischen Regler das Auslaßventil 16 der diesem Rad zugeordneten Bremse HR in seine Offenstellung geschaltet, wodurch der Druck in dem Auslaßraum 43 auf den Druck in der Rücklaufleitung 17 abfällt, während der zum Betätigen der Bremsen erzeugte Druck im Ventilraum 42 und in den Kanalbohrungen 28, 29 noch besteht. Die hierdurch plötzlich auftretende Druckdifferenz am Steuerkolben 35 verschiebt diesen gegen die Kraft der Feder 38 in Richtung Auslaßraum 43, wodurch die Kugel 39 den Ventilsitz 31 verschließt und vom Ventilsitz 37 abgehoben wird, um dadurch die direkte Verbindung der Kanalbohrung 28, 29 zu unterbrechen und die Kanalbohrung 29 an den Auslaßraum 43 anzuschließen. Bei diesem Vorgang bewirkt bereits die Verschiebung des Steuerkolbens 35 einen Druckabfall in der Kanalbohrung 29 und damit am Radzylinder der angeschlossenen Bremse HR. Nach dem Öffnen des Ventilsitzes 37 setzt sich der Druckabfall durch das Entweichen von Druckmittel aus dem Ventilraum 42 über die Längsbohrung 36, den Auslaßraum 43, die Anschlußbohrung 44 und die Auslaßleitung 15 in die Rücklaufleitung 17 fort. Aus der Kanalbohrung 28 kann in dieser Stellung des Einlaßventils 14 nur eine begrenzte Druckmittelmenge über die Drosselblende 49 nachströmen. Der Auslaßquerschnitt des Ventilsitzes 37 ist im Vergleich zum Querschnitt der Drosselblende 49 jedoch so bemessen, daß durch dieses Nachströmen die schnelle Druckabsenkung nicht beeinträchtigt wird.

Erfordert die Bremsschlupfregelung einen erneuten Druckaufbau, so wird das Auslaßventil 16 geschlossen. Hierdurch gleicht sich der Druck im Auslaßraum 43 an den im Ventilraum 42 herrschenden Druck an, so daß die Druckfeder 38 den Ventilkolben 35 soweit verschieben kann, bis der Ventilsitz 37 an der Kugel 39 anliegt. Die bei der Druckabsenkung entstandene Druckdifferenz zwischen den Kanalbohrungen 28, 29 hält die Kugel 39 jedoch weiterhin auf dem Ventilsitz 31 fest. Der erneute Druckaufbau erfolgt durch das über die Drosselblende 49 in die Kanalbohrung 29 einströmende Druckmittel, welches von der bei Einsetzen der Bremsschlupfregelung durch Einschalten des Motors M angetriebenen Pumpe 19 oder 20 zur Kanalbohrung 28 gefördert wird. Die Druckanstiegsgeschwindigkeit wird hierbei durch die Auslegung des Querschnitts der Drosselblende 49 bestimmt.

Durch ein getaktetes Ansteuern des jeweiligen Auslaßventils 16 läßt sich auch eine Druckhaltephase realisieren, indem die über das Auslaßventil 16 abgelassene Druckmittelmenge der Druckmittelmenge angeglichen wird, die über die Drosselblende 49 zugeführt wird. Ebenso lassen sich die Ventilöffnungszeiten des Auslaßventils 16 durch getaktetes Ansteuern so variieren, daß sich unterschiedliche Druckaufbau- bzw. Druckabbaugeschwindigkeiten ergeben.

Wird während der Regelung der Druck in der Kanalbohrung 29 an den Druck in der Kanalbohrung 28 angeglichen oder wird der Druck im Hauptbremszylinder 1 soweit abgesenkt, daß der Druck in der Kanalbohrung 28 den Druck in der Kanalbohrung 29 erreicht oder unterschreitet, so hebt die Kugel 39 von dem Ventilsitz 31 ab und ermöglicht ein ungehindertes Zurückfließen des Druckmittels zum Hauptbremszylinder 1. Eine Druckabsenkung oder Lösen der Bremse durch Änderung der Betätigungskraft am Bremspedal ist daher jederzeit möglich.

Figur 3 zeigt eine gegenüber der Ausführungsform gemäß Figur 2 abgewandelte Ausführungsform eines Einlaßventils 114. Einander entsprechende Bauteile sind daher mit den gleichen Bezugszeichen bezeichnet. Bei dem Einlaßventil 114 wird die Kugel 39 von einer Druckfeder 53 gegen die Anschlagscheibe 40 gedrückt, so daß sie in der Ruhestellung von dem Ventilsitz 31 und von dem Ventilsitz 37 abgehoben ist. Der Hub des Steuerkolbens 35 ist durch einen geschlitzten Anschlagbund 54 des Ventilsitzes 31 begrenzt. Der Steuerkolben 35 kann daher durch die Druckfeder 38 nicht bis zur Anlage des Ventilsitzes 37 an die Kugel 39 heranbewegt werden. An dem Ventilsitz 31 ist weiterhin eine zylindrische Hülse 55 befestigt, die die Kugel 39 mit Spiel umgibt.

Das Einlaßventil 114 wird in der dargestellten Lage mit nach oben gerichteter Kugel eingebaut. Hierdurch können Luftblasen, die in den Auslaßraum 43 eingedrungen sind, über den in der Ruhestellung geöffneten Ventilsitz 37 entweichen. Es findet somit eine selbsttätige Entlüftung des Auslaßraums 43 statt. Auf diese Weise wird eine Beeinträchtigung der Schaltfunktion des Einlaßventils 114 durch eingedrungene Luft wirksam vermieden. Das Schließen des Ventilsitzes 37 erfolgt beim Betätigen der Bremse oder gegebenenfalls beim Öffnen des Auslaßventils 16 durch den an der Kugel 39 auftretenden Staudruck, der durch den Ringspalt zwischen der Kugel 39 und der Hülse 55 erzeugt wird, wenn das Druckmittel aus der Kanalbohrung 28 in die Kanalbohrung 29 strömt. Weitere Unterschiede hinsichtlich der Ausgestaltung des Einlaßventils 114 sind rein baulicher Art. Die Wirkungsweise des Einlaßventils 114 entspricht daher im übrigen der oben angegebenen Wirkungsweise des Einlaßventils 14. Ensprechend ist auch hier zwischen den Kanalbohrungen 28, 29 eine Drosselblende 49 vorhanden, wobei diese jedoch in Figur 3 nicht dargestellt ist. Die Drosselblende kann bei diesem Ausführungsbeispiel auch durch einen Ringspalt gebildet werden, indem die Hülse 47 in einem Bereich eingeschnürt ist, in dem sich die Kugel bei geöffnetem Auslaßventil 16 befindet. Der Ventilsitz 31 wird dabei von der Kugel 39 nicht dicht verschlossen.

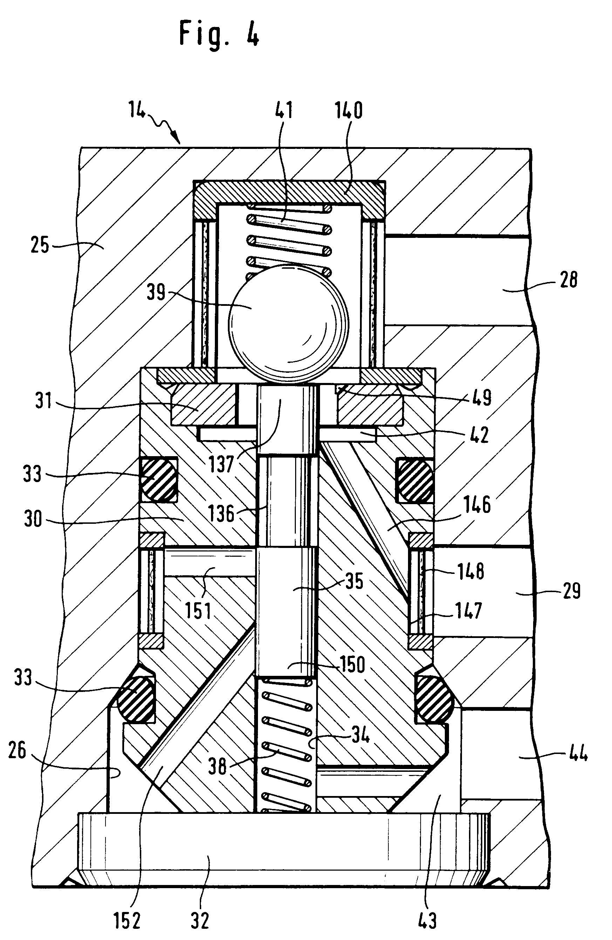

Bei dem in Figur 4 dargestellten Ausführungsbeispiel des druckgesteuerten Einlaßventils 14 ist in einem Gehäuse 25 eine Stufenbohrung 26 angeordnet, in die senkrecht dazu untereinander parallele Anschlußbohrungen 28, 29, 44 münden. In der Stufenbohrung 26 befindet sich ein hülsenförmiger Ventileinsatz 30 mit einem Ventilsitz 31. Der Ventileinsatz 30 ist durch einen die Stufenbohrung 26 nach außen verschließenden Stopfen 32 arretiert. Dichtringe 33 dichten den Ventileinsatz 30 beiderseits der Anschlußbohrung 29 in der Stufenbohrung 26 ab. Der Ventileinsatz 30 weist eine Längsbohrung 34 auf, deren Durchmesser kleiner ist als der Durchmesser des Ventilsitzes 31. In der Längsbohrung 34 ist ein Steuerkolben 35 mit einer Steuernut 136 axial beweglich gelagert. Der Steuerkolben 35 wird mit seinem in den Ventilsitz 31 hineinragenden Ende 137 von einer am Stopfen 32 abgestützten Druckfeder 38 gegen eine als Ventilelement dienende Kugel 39 gedrückt. Die Kugel 39 befindet sich in einem Filtereinsatz 140, der in der geschlossenen Endstufe der Stufenbohrung 26 angeordnet ist, und stützt sich über eine Druckfeder 41 am Boden des Filtereinsatzes 140 ab. Die Kräfte der Druckfedern 38, 41 sind so aufeinander abgestimmt, daß ohne die zusätzliche Einwirkung von Druckkräften die Kugel 39 durch den Steuerkolben 35 von dem Ventilsitz 31 abgehoben wird.

Der Steuerkolben 35 teilt die Längsbohrung 34 in einen an den Ventilsitz 31 angrenzenden Ventilraum 42 und einen Auslaßraum 43, in den die Anschlußbohrung 44 mündet. Der Ventilraum 42 steht durch eine Schrägbohrung 146 im Ventileinsatz 30 mit der Anschlußbohrung 29 in Verbindung. Die Schrägbohrung 146 mündet in eine zwischen den Dichtringen 33 in der Mantelfläche des Ventileinsatzes 30 vorhandene Ringnut 147, in der sich ein ringförmiger Filtereinsatz 148 befindet. Die Anschlußbohrung 28 mündet in die Endstufe der Stufenbohrung 26, die durch den Ventilsitz 31 von dem Ventilraum 42 getrennt ist.

In der Dichtkante des Ventilsitzes 31 ist durch eine Kerbe eine Drosselblende 49 gebildet, die bei geschlossenem Ventilsitz 31 wirksam wird und parallel zu dem Ventilsitz 31 die Endstufe der Stufenbohrung 26 mit dem Ventilraum 42 verbindet.

Figur 4 zeigt das Einlaßventil 14 in seiner Grundstellung, in der die mit der Druckleitung 6 bzw. 7 zu verbundene Anschlußbohrung 28 über den offenen Ventilsitz 31 mit der an die Druckleitung 12 bzw. 13 angeschlossenen Anschlußbohrung 29 in Verbindung steht. Der Steuerkolben 35 trennt mit seinem der Druckfeder 38 benachbarten Ende 150 zwei in axialer Richtung im Abstand voneinander in die Längsbohrung 34 mündende Ventilbohrungen 151, 152 druckdicht voneinander. Die Ventilbohrung 151 verbindet die Längsbohrung 34 über die Ringnut 147 mit der Anschlußbohrung 29, und die Ventilbohrung 152 verbindet die Längsbohrung 34 über den Auslaßraum 43 mit der Anschlußbohrung 44. In dieser Grundstellung verbleibt das Einlaßventil 14, solange keine Bremsdruckregelung stattfindet und das an die Anschlußbohrung 44 angeschlossene Auslaßventil 16 geschlossen ist. Die Bremsen HR, HL können dabei durch Betätigen des Hauptbremszylinders 1 nach Maßgabe der am Bremspedal 3 ausgeübten Kraft mit Druck beaufschlagt werden.

Wird während eines Bremsvorgangs mittels hierfür vorgesehener Sensoren festgestellt, daß eines der Fahrzeugräder, beispielsweise das rechte Hinterrad zu blockieren droht, so wird von einem elektronischen Regler das Auslaßventil 16 der diesem Rad zugeordneten Bremse HR in seine Offenstellung geschaltet, wodurch der Druck in dem Auslaßraum 43 auf den Druck in der Rücklaufleitung 17 abfällt, während der zum Betätigen der Bremse erzeugte Druck im Ventilraum 42 und den Anschlußbohrungen 28, 29 noch besteht. Die hierdurch plötzlich auftretende Druckdifferenz am Steuerkolben 35 verschiebt diesen gegen die Kraft der Druckfeder 38 in Richtung Auslaßraum 43, wodurch die Kugel 39 den Ventilsitz 31 verschließt, um dadurch die direkte Verbindung der Anschlußbohrungen 28, 29 bis auf den Querschnitt der Drosselblende 49 zu unterbrechen. Bei diesem Vorgang bewirkt bereits die Verschiebung des Steuerkolbens 35 einen Druckabfall in der Anschlußbohrung 29 und damit am Radzylinder der angeschlossenen Bremse HR. Nach dem Schließen des Ventilsitzes 31 wird der Steuerkolben 35 durch die Druckdifferenz noch soweit in Richtung des Auslaßraums 43 verschoben, bis die Steuernut 136 in den Bereich der Mündung der Ventilbohrung 152 gelangt und diese mit der Ventilbohrung 151 verbindet. Hierdurch kann nun Druckmittel unmittelbar aus der Anschlußbohrung 29 und dem daran angeschlossenen Radbremszylinder über die Ventilbohrungen 151, 152, den Auslaßraum 43, die Anschlußbohrung 44 und die Auslaleitung 15 in die Rücklaufleitung 17 gelangen, so daß sich der Druckabfall an dem Radzylinder ungehindert fortsetzt. Aus der Anschlußbohrung 28 kann in dieser Stellung des Einlaßventils 14 nur eine begrenzte Druckmittelmenge über die Drosselblende 49 nachströmen. Der durch den Steuerkolben 35 freigegebene Auslaßquerschnitt ist im Vergleich zum Querschnitt der Drosselblende 49 jedoch so groß bemessen, daß durch dieses Nachströmen die schnelle Druckabsenkung nicht beeinträchtigt wird.

Erfordert die Bremsschlupfregelung einen erneuten Druckaufbau, so wird das Auslaßventil 16 geschlossen. Hierdurch gleicht sich der Druck im Auslaßraum 43 an den im Ventilraum 42 herrschenden Druck an, so daß die Druckfeder 38 den Ventilkolben 35 soweit verschieben kann, bis der Steuerkolben 35 mit seinem Ende 137 wiederum an der Kugel 39 anliegt, wobei er die Mündung der Ventilbohrung 152 verschließt. Der Ventilsitz 31 bleibt geschlossen, da die bei der Druckabsenkung entstandene Druckdifferenz zwischen den Anschlußbohrungen 28 und 29 die Kugel 39 weiterhin auf dem Ventilsitz 31 festhält. Der erneute Druckaufbau erfolgt durch das über die Drosselblende 49 in den Ventilraum 42 einströmende Druckmittel, welches von der bei Einsetzen der Bremsschlupfregelung durch Einschalten des Motors M angetriebenen Pumpe 19 oder 20 zur Kanalbohrung 28 gefördert wird. Die Druckanstiegsgeschwindigkeit wird hierbei durch die Auslegung des Querschnitts der Drosselblende 49 bestimmt.

Durch ein getaktetes Ansteuern des jeweiligen Auslaßventils 16 läßt sich auch eine Druckhaltephase realisieren, indem die über das Auslaßventil 16 abgelassene Druckmittelmenge der Druckmittelmenge angeglichen wird, die über die Drosselblende 49 zugeführt wird. Ebenso lassen sich die Ventilöffnungszeiten des Auslaßventils 16 durch getaktetes Ansteuern so variieren, daß sich unterschiedliche Druckaufbau- bzw. Druckabbaugeschwindigkeiten ergeben.

Wird während der Regelung der Druck in der Anschlußbohrung 29 an den Druck in der Anschlußbohrung 38 angeglichen, oder wird der Druck im Hauptbremszylinder 1 soweit abgesenkt, daß der Druck in der Anschlußbohrung 28 den Druck in der Anschlußbohrung 29 erreicht oder unterschreitet, so hebt die Kugel 39 von dem Ventilsitz 31 ab und ermöglicht ein ungehindertes Zurückfließen des Druckmittels zum Hauptbremszylinder 1. Eine Druckabsenkung oder Lösen der Bremse durch Änderung der Betätigungskraft am Bremspedal ist daher jederzeit möglich.

### Bezugszeichenliste:

- 1: Hauptbremszylinder
- 2: Unterdruckbremskraftverstärker
- 3: Bremspedal
- 4: Vorratsbehälter
- 5: Wegschalter
- 6: Druckleitung
- 7: Druckleitung
- 8: Ventil
- 9: Ventil
- 10: Rückschlagventil
- 11: Rückschlagventil
- 12: Druckleitung
- 13: Druckleitung
- 14: Einlaßventil
- 15: Rücklaufleitung
- 16: Auslaßventil
- 17: Rücklaufleitung
- 18: Rücklaufleitung
- 19: Pumpe
- 20: Pumpe
- 21: Saugleitung
- 22: Saugventil
- 23: Druckventil
- 24: Druckleitung
- 25: Gehäuse
- 26: Stufenbohrung
- 27: Stufenbohrung
- 28: Kanalbohrung
- 29: Kanalbohrung
- 30: Ventileinsatz
- 31: Ventilsitz
- 32: Anschlußstopfen
- 33: Dichtring
- 34: Bohrung
- 35: Steuerkolben
- 36: Längsbohrung
- 37: Ventilsitz
- 38: Druckfeder
- 39: Kugel
- 40: Anschlagscheibe
- 41: Druckfeder
- 42: Ventilraum
- 43: Auslaßraum
- 44: Anschlußbohrung
- 45: Ringspalt
- 46: Radialbohrung
- 47: Hülse
- 48: Längsbohrung
- 49: Drosselblende
- 50: Filterpatrone
- 51: Dichtring
- 52: Stopfen
- 53: Druckfeder
- 54: Anschlagbund
- 55: Hülse
- 114: Einlaßventil
- 136: Steuernut
- 137: Ende
- 140: Filtereinsatz
- 146: Schrägbohrung
- 147: Ringnut
- 148: Filtereinsatz
- 150: Ende
- 151: Ventilbohrung
- 152: Ventilbohrung

## Patentansprüche

1. Bremsdruckregelvorrichtung für eine hydraulische Kraftfahrzeugbremsanlage mit einem Bremsdruckgeber (1,2) wenigstens einem an diesen über eine Druckleitung (6,12;7,13) angeschlossenen Bremsdrucknehmer zur Betätigung einer Bremse, einem in der Druckleitung (12,13) angeordneten, druckgesteuerten Einlaßventil (14,114), durch das der Bremsdruckgeber in einer ersten Schaltstellung ungedrosselt und in einer zweiten Schaltstellung über eine Drosselblende (49) mit dem Bremsdrucknehmer verbunden wird und das einen Steuerkolben (35) aufweist, der in einer Richtung vom Druck in der Druckleitung (6,12;7,13) und in der entgegengesetzten Richtung von einer Feder (38) und vom Druck in einer an das Ventil angeschlossenen Rücklaufleitung (15,17,18) beaufschlagt ist, die ein durch eine Regeleinrichtung steuerbares Auslaßventil (16) enthält, das in seiner Ruhestellung die Rücklaufleitung (15,17,18) sperrt und in seiner Schaltstellung die Rücklaufleitung (15,17,18) freigibt, wobei der Steuerkolben (35) eine Verbindung zwischen dem Bremsdrucknehmer und der Rücklaufleitung (19,17,18) steuert, dadurch **gekennzeichnet**, daß das Einlaßventil (14, 114) ein mit dem Steuerkolben (35) zusammenwirkendes Ventilelement (39) aufweist, das in der zweiten Schaltstellung die Druckleitung (12, 13) sperrt und einen durch eine Längsbohrung (36) des Steuerkolbens (35) gebildeten Ventilsitz (37) freigibt, durch den der Bremsdrucknehmer an die Rücklaufleitung (15, 17, 18) anschließbar ist.

2. Bremsdruckregelvorrichtung nach Anspruch 1, dadurch **gekennzeichnet**, daß zwischen der Mantelfläche des Steuerkolbens (35) und der Bohrung (34), in der der Steuerkolben (35) gelagert ist, ein Ringspalt (45) gebildet ist, durch den der Bremsdrucknehmer mit der Rücklaufleitung (15, 17, 18) verbunden ist.

3. Bremsdruckregelvorrichtung nach Anspruch 2, dadurch **gekennzeichnet**, daß der Steuerkolben (35) in seiner Mantelfläche Radialnuten aufweist.

4. Bremsdruckregelvorrichtung nach einem der vorhergehenden Ansprüche, dadurch **gekennzeichnet**, daß die Drosselblende (49) auswechselbar in einem parallel zum Einlaßventil (14), beide Zweige (28, 29) der Druckleitung (12 bzw. 13) verbindenden Kanal (27) angeordnet ist.

5. Bremsdruckregelvorrichtung nach einem der vorhergehenden Ansprüche, dadurch **gekennzeichnet**, daß beiderseits der Drosselblende (49) Filterelemente (50) angeordnet sind.

6. Bremsdruckregelvorrichtung nach Anspruch 5, dadurch **gekennzeichnet**, daß die Drosselblende (49) und die Filterelemente (50) in einer Hülse (47) angeordnet sind, die von außen in eine Gehäusebohrung (27) einsetzbar ist.

7. Bremsdruckregelvorrichtung nach einem der vorhergehenden Ansprüche, dadurch **gekennzeichnet**, daß das Einlaßventil (14, 114) als Doppelkugelsitzventil ausgebildet ist mit einem durch eine Kugel (39) gebildeten Ventilelement, das mit einem gehäusefesten, äußeren Ventilsitz (31) und einem beweglichen, inneren Ventilsitz (37) zusammenwirkt.

8. Bremsdruckregelvorrichtung nach einem der vorhergehenden Ansprüche, dadurch **gekennzeichnet**, daß das Ventilelement (39) in der Ruhestellung durch die Kraft einer am äußeren Ventilsitz (31) abgestützten Feder (53) in einer von den Ventilsitzen (31, 37) abgehobenen Stellung gehalten wird und daß Mittel zur Erzeugung eines der Federkraft entgegengerichteten, dynamischen Staudrucks vorgesehen sind, durch den das Ventilelement (39) bei einem vom Bremsdruckgeber über die Druckleitung zum Bremsdrucknehmer oder zur Rücklaufleitung gerichteten Druckmittelstrom gegen den inneren Ventilsitz (37) am Steuerkolben (35) gedrückt wird.

9. Bremsdruckregelvorrichtung nach Anspruch 8, dadurch **gekennzeichnet**, daß die Mittel zur Erzeugung eines dynamischen Staudrucks aus einer zylindrischen Hülse (55) bestehen, die das aus einer Kugel (39) bestehende Ventilelement mit geringem Abstand umgibt.

10. Bremsdruckregelvorrichtung nach Anspruch 9, dadurch **gekennzeichnet**, daß die Drosselblende durch einen eingeschnürten Bereich der Hülse (55) und die in diesen Bereich bewegbare Kugel (39) gebildet wird.

11. Bremsdruckregelvorrichtung für eine hydraulische Kraftfahrzeugbremsanlage mit einem Bremsdruckgeber (1,2) wenigstens einem an diesen über eine Druckleitung (6,12;7,13) angeschlossenen Bremsdrucknehmer zur Betätigung einer Bremse, einem in der Druckleitung (12,13) angeordneten, druckgesteuerten Einlaßventil (14,114), durch das der Bremsdruckgeber in einer ersten Schaltstellung ungedrosselt und in einer zweiten Schaltstellung über eine Drosselblende (49) mit dem Bremsdrucknehmer verbunden wird und das einen Steuerkolben (35) aufweist, der in einer Richtung vom Druck in der Druckleitung (6,12;7,13) und in der entgegengesetzten Richtung von einer Feder (38) und vom Druck in einer an das Ventil angeschlossenen Rücklaufleitung (15,17,18) beaufschlagt ist, die ein durch eine Regeleinrichtung steuerbares Auslaßventil (16) enthält, das in seiner Ruhestellung die Rücklaufleitung (15,17,18) sperrt und in seiner Schaltstellung die Rücklaufleitung (15,17,18) freigibt, wobei der Steuerkolben (35) eine Verbindung zwischen dem Bremsdrucknehmer und der Rücklaufleitung (19,17,18) steuert, dadurch **gekennzeichnet**, daß das Einlaßventil (14) ein Sitzventil mit einem durch den Steuerkolben (35) betätigbaren Ventilelement (39) aufweist, das in der Drosselstellung einen zur Drosselblende (49) parallelen Ventilsitz (31) sperrt und daß der Steuerkolben (35) in der Drosselstellung unabhängig vom Ventilelement (39) druckgesteuert bewegbar ist.

12. Bremsdruckregelvorrichtung nach Anspruch 11, dadurch **gekennzeichnet**, daß der Steuerkolben (35) in einer Längsbohrung (34) eines zylindrischen Ventileinsatzes (30) gelagert ist, der an einem Ende den Ventilsitz (31) trägt und im Abstand voneinander in die Längsbohrung (34) mündende Ventilbohrungen (151, 152) aufweist, die durch eine Steuernut (136) im Steuerkolben (35) miteinander verbindbar sind.

13. Bremsdruckregelvorrichtung nach Anspruch 12, dadurch **gekennzeichnet**, daß der Ventileinsatz (30) in einer Nut (147) in seiner Mantelfläche einen die Mündung einer Ventilbohrung (146, 151) bedeckenden ringförmigen Filtereinsatz (148) aufweist.

14. Bremsdruckregelvorrichtung nach einem der Ansprüche 12 oder 13, dadurch **gekennzeichnet**, daß das von einer Kugel gebildete Ventilelement (39) mit einer das Ventilelement (39) beaufschlagenden Ventilfeder (41) in einem topfförmigen Filterelement (140) angeordnet ist, das von dem Ventileinsatz (30) in seiner Einbaulage in einer Gehäusebohrung (26) gehalten wird.

## Claims

1. A brake pressure control apparatus for a hydraulic automotive vehicle brake system which includes a brake pressure master unit (1, 2), at least one brake pressure slave unit connected to the brake pressure master unit through a pressure line (6, 12; 7, 13) for the actuation of a brake, a pressure-controlled inlet valve (14, 114) which is positioned in the pressure line (12, 13) and through which the brake pressure master unit, in a first switching position of the inlet valve, is connected in an unrestricted fashion and, in a second switching position of the inlet valve, is connected through a restrictor orifice (49) to the brake pressure slave unit, the pressure-controlled inlet valve having a control piston (35) which, in one direction, is subjected to the pressure in the pressure line (6, 12; 7, 13) and, in the opposite direction, is acted upon by a spring (38) and the pressure in a return line (15, 17, 18) which is connected to the valve and contains an outlet valve (16) which is controllable by a control device, which blocks the return line (15, 17, 18) in its position of rest and opens the return line (15, 17, 18) in its switching position, the control piston (35) governing a connection between the brake pressure slave unit and the return line (19, 17, 18),
**characterized** in that the inlet valve (14, 114) has a valve element (39) which interacts with the control piston (35) and, in the second switching position, blocks the pressure line (12, 13) and releases a valve seat (37), which is formed by a longitudinal bore (36) of the control piston (35) and by which the brake pressure slave unit is connectible to the return line (15, 17, 18).

2. A brake pressure control apparatus as claimed in claim 1,
**characterized** in that a ring-shaped passage (45), by which the brake pressure slave unit is connected to the return line (15, 17, 18) is formed between the peripheral surface of the control piston (35) and the bore (34) in which the control piston (35) is accommodated.

3. A brake pressure control apparatus as claimed in claim 2,
**characterized** in that the control piston (35) is formed with radial grooves in its peripheral surface.

4. A brake pressure control apparatus as claimed in anyone of the preceding claims,
**characterized** in that the restrictor orifice (49) is exchangeably positioned in a duct (27) which connects both branches (28, 29) of the pressure line (12 and 13), in parallel to the inlet valve (14).

5. A brake pressure control apparatus as claimed in anyone of the preceding claims,
**characterized** in that filter elements (50) are positioned on either side of the restrictor orifice (49).

6. A brake pressure control apparatus as claimed in claim 5,
**characterized** in that the restrictor orifice (49) and the filter elements (50) are accommodated in a bushing (47) which is insertable into a housing bore (27) from the outside.

7. A brake pressure control apparatus as claimed in anyone of the preceding claims,
**characterized** in that the inlet valve (14, 114) is arranged in the shape of a double-seated ball valve with a valve element which is formed by a ball (39) and which interacts both with an external valve seat (31) rigid with the housing and with a movable internal valve seat (37).

8. A brake pressure control apparatus as claimed in anyone of the preceding claims,
**characterized** in that, in its position of rest, the valve element (39) is maintained in a position so as to be lifted off from the valve seats (31, 37) by the force of a spring (53) which takes support at the external valve seat (31), and in that a means is provided to generate a dynamic pressure, in opposition to the spring force, by which the valve element (39) is urged against the internal valve seat (37) at the control piston (35) in the presence of a flow of hydraulic pressure fluid directed from the brake pressure master unit over the pressure line to the brake pressure slave unit or to the return line.

9. A brake pressure control apparatus as claimed in claim 8,
**characterized** in that the means for the generation of a dynamic pressure is a cylindrical bushing (55) which surrounds the valve element, constituted by a ball (39), spaced therefrom by a small distance.

10. A brake pressure control apparatus as claimed in claim 9,
**characterized** in that the restrictor orifice is formed by a necked range of the bushing (55) and by the ball (39) being movable into the necked range.

11. A brake pressure control apparatus for a hydraulic automotive vehicle brake system which includes a brake pressure master unit (1, 2), at least one brake pressure slave unit connected to the brake pressure master unit through a pressure line (6, 12; 7, 13) for the actuation of a brake, a pressure-controlled inlet valve (14, 114) which is positioned in the pressure line (12, 13) and through which the brake pressure master unit, in a first switching position of the inlet valve, is connected in an unrestricted fashion and, in a second switching position of the inlet valve, is connected through a restrictor orifice (49) to the brake pressure slave unit, the pressure-controlled inlet valve having a control piston (35) which, in one direction, is subjected to the pressure in the pressure line (6, 12; 7, 13) and, in the opposite direction, is acted upon by a spring (38) and the pressure in a return line (15, 17, 18) which is connected to the valve and contains an outlet valve (16) which is controllable by a control device, which blocks the return line (15, 17, 18) in its position of rest and opens the return line (15, 17, 18) in its switching position, the control piston (35) governing a connection between the brake pressure slave unit and the return line (19, 17, 18),
**characterized** in that the inlet valve (14) has a seat valve including a valve element (39) which is actuatable by the control piston (35) and which, in the restricting position, blocks a valve seat (31) which is disposed in parallel to the restrictor orifice (49), and in that, in the restricting position, the control piston (35) is movable in a pressure-controlled manner independently of the valve element (39).

12. A brake pressure control apparatus as claimed in claim 11,
**characterized** in that the control piston (35) is accommodated within a longitudinal bore (34) of a cylindrical valve insert (30) which bears the valve seat (31) at one end and which has valve bores (151, 152) opening into the longitudinal bore (34) at a distance from each other and connectible to each other by means of a control groove (136) in the control piston (35).

13. A brake pressure control apparatus as claimed in claim 12,
**characterized** in that, in a groove (147) in its peripheral surface, the valve insert (30) has a ring-shaped filter insert (148) which covers the mouth of a valve bore (146, 151).

14. A brake pressure control apparatus as claimed in anyone of claims 12 or 13,
**characterized** in that the valve element (39), which is formed by a ball, is positioned together with a valve spring (41), which acts on the valve element (39), within a cup-shaped filter element (140) retained in its mounting position within a housing bore (26) by the valve insert (30).

## Revendications

1. Dispositif régulateur de pression de freinage pour un système de freinage hydraulique pour véhicules automobiles, comportant un générateur de pression de freinage (1, 2), au moins un récepteur de pression de freinage relié à celui-ci via une conduite de pression (6, 12; 7, 13), destiné à actionner un frein, un clapet d'admission (14, 114) disposé dans la conduite de pression (12, 13) et piloté par la pression, au moyen duquel le générateur de pression est relié au récepteur de pression de freinage de façon non-étranglée dans une première position de commutation, et de façon étranglée, à travers un diaphragme d'étranglement (49), dans une deuxième position de commutation, et comportant un piston de commande (35) soumis, dans un sens, à la pression régnant dans la conduite de pression (6, 12; 7, 13) et, dans le sens opposé, à l'action d'un ressort (38) et celle de la pression régnant dans une conduite de retour (15, 17, 18) raccordée au clapet, la conduite comprenant un clapet d'échappement (16) pouvant être commandé par l'intermédiaire d'un dispositif régulateur et obturant, dans sa position de repos, la conduite de retour (15, 17, 18) et ouvrant cette conduite de retour (15, 17, 18) dans sa position de commutation, le piston de commande (35) commandant une communication entre le récepteur de pression de freinage et la conduite de retour (19, 17, 18), caractérisé en ce que le clapet d'admission (14, 114) comporte un élément de clapet (39) coopérant avec le piston de commande (35), cet élément obturant la conduite de pression dans ladite deuxième position de commutation et découvrant un siège de clapet (37) constitué par un alésage longitudinal (36) du piston de commande (35), à travers lequel le récepteur de pression de freinage peut être raccordé à la conduite de retour (15, 17, 18).

2. Dispositif régulateur de pression de freinage selon la revendication 1, caractérisé en ce qu'une fente annulaire (45) est formée entre la surface enveloppante du piston de commande (35) et l'alésage (34) dans lequel est logé le piston de commande (35), fente à travers laquelle le récepteur de pression de freinage est relié a la conduite de retour (15, 17, 18).

3. Dispositif régulateur de pression de freinage selon la revendication 2, caractérisé en ce que le piston de commande (35) comporte des rainures radiales ménagées dans la surface enveloppante de celui-ci.

4. Dispositif régulateur de pression de freinage selon l'une des revendications précédentes, caractérisé en ce que le diaphragme d'étranglement (49) est disposé de façon remplaçable dans une canalisation (27) agencée parallèlement au clapet d'admission (14) et reliant les deux branches (28, 29) de la conduite de pression (12 ou 13) l'une à l'autre.

5. Dispositif régulateur de pression de freinage selon l'une des revendications précédentes, caractérisé en ce que des éléments filtrants (50) sont disposés de chaque côté du diaphragme d'étranglement (49).

6. Dispositif régulateur de pression de freinage selon la revendication 5, caractérisé en ce que le diaphragme d'étranglement (49) et les éléments filtrants (50) sont disposés dans une douille (47) pouvant être insérée de l'extérieur dans l'alésage (27) du corps.

7. Dispositif régulateur de pression de freinage selon l'une des revendications précédentes, caractérisé en ce que le clapet d'admission (14, 114) est réalisé sous forme d'un double clapet à bille et comporte un élément de clapet constitué par une bille (39) coopérant avec un siège de clapet fixe extérieur (31) et un siège de clapet mobile intérieur (37).

8. Dispositif régulateur de pression de freinage selon l'une des revendications précédentes, caractérisé en ce qu'en position de repos, l'élément de clapet (39) est maintenu, par la force d'un ressort (53) s'appuyant sur le siège de clapet extérieur (31), dans une position décollée des sièges de soupape (31, 37), et en ce que des moyens sont prévus, permettant de créer une pression dynamique dirigée à l'encontre de la force du ressort, qui plaque l'élément de clapet (39) sur le siège de clapet intérieur agencé sur le piston de commande (35), en présence d'un flux de fluide sous pression dirigé du générateur de pression de freinage vers le récepteur de pression de freinage, via la conduite de pression, ou vers la conduite de retour.

9. Dispositif régulateur de pression de freinage selon la revendication 8, caractérisé en ce que les moyens destinés à créer une pression dynamique sont constitués par une douille cylindrique (55) qui entoure l'élément de clapet, constitué par une bille (39), à une faible distance de celui-ci.

10. Dispositif régulateur de pression de freinage selon la revendication 9, caractérisé en ce que le diaphragme d'étranglement est constitué par une zone resserrée de la douille (55) et par la bille (39) disposée de façon mobile dans cette zone.

11. Dispositif régulateur de pression de freinage pour un système de freinage hydraulique pour véhicules automobiles, comprenant un générateur de pression de freinage (1, 2), au moins un récepteur de pression de freinage relié à celui-ci via une conduite de pression (6, 12; 7, 13), destiné à actionner un frein, un clapet d'admission (14, 114) disposé dans la conduite de pression (12, 13) et piloté par la pression, au moyen duquel le générateur de pression est relié au récepteur de pression de freinage de façon non-étranglée dans une première position de commutation, et de façon étranglée, à travers un diaphragme d'étranglement (49), dans une deuxième position de commutation, et comportant un piston de commande (35) soumis, dans un sens, à la pression régnant dans la conduite de pression (6, 12; 7, 13) et, dans le sens opposé, à l'action d'un ressort (38) et celle de la pression régnant dans une conduite de retour (15, 17, 18) raccordée au clapet, la conduite comprenant un clapet d'échappement (16) pouvant être commandé par l'intermédiaire d'un dispositif régulateur et obturant, dans sa position de repos, la conduite de retour (15, 17, 18) et ouvrant cette conduite de retour (15, 17, 18) dans sa position de commutation, le piston de commande (35) commandant une communication entre le récepteur de pression de freinage et la conduite de retour (19, 17, 18), caractérisé en ce que le clapet de commande (14) comporte un clapet à siège comprenant un élément de clapet pouvant être actionné par le piston de commande (35), cet élément obturant, en position d'étranglement, un siège de clapet (31) parallèle au diaphragme d'étranglement (49), et en ce qu'en position d'étranglement, le piston de commande (35) peut être déplacé via la pression, indépendamment de l'élément de soupape (39).

12. Dispositif régulateur de pression de freinage selon la revendication 11, caractérisé en ce que le piston de commande (35) est logé dans un alésage longitudinal (34) d'un insert cylindrique (30) de clapet, qui porte, à une extrémité, le siège de clapet (31), et comporte des alésages de clapet (151, 152) débouchant dans l'alésage longitudinal (34) à une distance l'un de l'autre, ces alésages pouvant être reliés l'un à l'autre par l'intermédiaire d'une rainure de commande (136) ménagée dans le piston de commande (35).

13. Dispositif régulateur de pression de freinage selon la revendication 12, caractérisé en ce que l'insert de clapet (30) comporte, dans une rainure (147) ménagée dans sa surface enveloppante, un insert filtrant annulaire (148) recouvrant l'embouchure de l'alésage de clapet (146, 151).

14. Dispositif régulateur de pression de freinage selon l'une des revendications 12 ou 13, caractérisé en ce que l'élément de clapet (39) constitué par une bille est disposé dans un élément filtrant (140) en forme de cloche, en conjonction avec un ressort de clapet (41) appuyant sur l'élément de clapet (39), l'élément filtrant étant maintenu dans sa position d'installation dans un alésage (26) du corps au moyen de l'insert de clapet (30).
